# EUROPEAN PATENT APPLICATION

(11) **EP 1 503 531 A2**
(43) Date of publication of application: **02.02.2005**
(21) Application number: 04010002.6
(22) Date of filing: 27.04.2004
(51) Int. Cl.: H04J 14/02

(54) **WDM passive optical network using multi-wavelength laser source and reflective optical amplification means**

(30) Priority: 28.07.2003 KR 2003052011
(71) Applicant: Samsung Electronics Co., Ltd., Suwon-si, Gyeonggi-do (KR)
(72) Inventor: Jung, Dae-Kwang, Yeongtong-gu, Suwon-si, Gyeonggi-do (KR); Oh, Yun-Je, Yeongtong-gu, Suwon-si, Gyeonggi-do (KR); Hwang, Seong-Taek, Yeongtong-gu, Suwon-si, Gyeonggi-do (KR)
(74) Representative: Grünecker, Kinkeldey, Stockmair & Schwanhäusser Anwaltssozietät

(57) **Abstract**

A wavelength-division-multiplexed passive optical network using an economical multi-wavelength lasing source and a reflective optical amplification device is disclosed. The wavelength-division-multiplexed passive optical network includes a central office in which a multi-wavelength lasing source is located; a plurality of subscriber terminals for transmitting an upward signal by a reflection signal of a multi-wavelength signal transmitted from the central office; and a local office, which is connected among the central office and the subscriber terminals through transmission optical fibers, for demultiplexing the multi-wavelength signal transmitted from the central office and transmitting the demultiplexed signal to the subscriber terminals, and for multiplexing signals inputted from each of the subscriber terminals and transmitting the multiplexed signals to the central office.

## Description

The present invention relates to a wavelength-division-multiplexed passive optical network and to a corresponding operation method, and more particularly to a wavelength-division-multiplexed passive optical network using a multi-wavelength lasing source and a reflective optical amplification means.

In general, a passive optical network (PON) comprises a central office, an optical distributor, and a plurality of subscriber terminals. These optical components are connected to each other through an optical fiber. The central office and the subscriber terminals include light sources for enabling the transmission of data. In particular, the central office includes a downward light source to transmit data in the downward direction, and each of the subscriber terminals includes an upward light source to transmit data in the upward direction. In a wavelength-division-multiplexed passive optical network (WDM-PON), wavelength-division-multiplexed light sources are used as such light sources.

The WDM-PON provides a high-speed broadband communication service using specific wavelengths assigned to each of subscriber terminals. Therefore, The WDM-PON can ensure the secrecy of communication, accommodate special communication services required from the respective subscribe terminals, including the enlargement of channel capacity. Further, it can increase the number of subscribers easily by assigning additional wavelengths to new subscribers.

However, in spite of the advantages described above, the WDM-PON has not yet been put to practical use. The reason is that the WDM-PON requires both the light source having a specific oscillation wavelength and the additional wavelength stabilization circuit to stabilize the wavelength of the light source in each of the central office and the subscriber terminals, thereby requiring a heavy economic burden of subscribers. Therefore, it is necessary to develop an economical wavelength-division-multiplexed light source in order to put the WDM-PON to practical use.

Examples of the wavelength-division-multiplexed light sources used in the WDM-PON include a distributed feedback laser array (DFB laser array), a multi-frequency laser (MFL), a spectrum-sliced light source, a mode-locked Fabry-Perot laser with incoherent light, and a reflective semiconductor optical amplifier.

The characteristics of the respective light sources will be described as follows.

### 1. Distributed feedback laser array and multi-frequency laser

The distributed feedback laser array and the multi-frequency laser have complicated manufacturing processes and expensive. In addition, they require correct wavelength selectivity and wavelength stabilization for realizing the wavelength-division-multiplexed method.

### 2. Spectrum-sliced light source

The spectrum-sliced light source is configured to spectrum-slice an optical signal of wide bandwidth using an optical filter or a waveguide grating router (WGR), thereby providing a great number of wavelength-divided channels. Therefore, the spectrum-sliced light source doesn't need an light source having a specific oscillation wavelength, and also doesn't require a device to stabilize wavelength. Examples of the spectrum-sliced light source include a light emitting diode (LED), a super luminescent diode (SLD), a Fabry-Perot laser (FP laser), a fiber amplifier light source, and a ultra-short pulse light source.

Among these light sources, the light emitting diode and the super luminescent diode have very wide optical bandwidths and cost less. However, the light emitting diode and the super luminescent diode have narrow modulation bandwidths and low output powers, thereby having characteristics fitting as a light source for the upward signals which have lower modulation speed as compared to a downward signals. The Fabry-Perot laser is a low cost device, but cannot provide a number of wavelength-divided channels due to its narrow bandwidth. Also, in the case of modulating a spectrum-sliced signal at high speed and transmitting the modulated signal, the Fabry-Perot laser has a disadvantage in that serious degradation is caused by the mode partition noise. Lastly, the ultra-short pulse light source has characteristics in that spectrum bandwidth of the light source is very wide and has coherence. However, the ultra-short pulse light source has disadvantages in that stabilization of spectrum to be oscillated is low and a pulse width is only a few ps, thus its realization is difficult.

In addition to above light sources, a spectrum-sliced fiber amplifier light source, which spectrum-slices an amplified spontaneous emission light (ASE light) generated from an optical fiber amplifier and that can provide a number of wavelength-divided high-power channels, has been proposed. However, such a spectrum-sliced light source must use an additional high-priced external modulator (for example, LiNbO₃ modulator, etc.) so that respective channels transmit different data from each other.

### 3. Mode-locked Fabry-Perot laser with incoherent light

A mode-locked Fabry-Perot laser is configured to spectrum-slice a wide-bandwidth optical signal generated from an incoherent light source - such as a light emitting diode, a fiber amplifier light source, and so forth - using an optical filter or a waveguide grating router. It inputs the spectrum-sliced light signals into a Fabry-Perot laser equipped with no isolator, and then a mode-locked signal outputted from the Fabry-Perot laser is used for transmission. In the case that a spectrum-sliced signal above a predetermined output power is inputted into a Fabry-Perot laser, the Fabry-Perot laser has a characteristic of generating and outputting only the same wavelength as that of the spectrum-sliced signal inputted into the Fabry-Perot laser.

Also, the mode-locked Fabry-Perot laser modulates a Fabry-Perot laser directly according to a data signal, thereby transmitting data economically. However, with the mode-locked Fabry-Perot laser with incoherent light, in order to output a mode-locked signal suitable for high-speed long distance transmission, a wide-bandwidth high-power optical signal must be inputted into the Fabry-Perot laser. In addition, in the case that a mode gap of Fabry-Perot laser output signals is wider than a line width of spectrum-sliced signals, mode of the Fabry-Perot laser can be changed according to ambient temperature change. As a result, a signal generated from the Fabry-Perot laser deviates from the wavelength identical to that of a spectrum-sliced signal inputted into the Fabry-Perot laser, so that the mode-lock phenomenon of the Fabry-Perot laser is released. As such, it is impossible to use the mode-locked Fabry-Perot laser as a wavelength-division multiplexed light source. Therefore, in order to use a mode-locked Fabry-Perot laser as a wavelength-division multiplexed light source, an external temperature control using a thermoelectric cooler controller (TEC controller) is necessary.

### 4. Reflective semiconductor optical amplifier

A reflective semiconductor optical amplifier is configured to spectrum-slice a wide-bandwidth optical signal generated from an incoherent light source (for example, a light emitting diode, a fiber amplifier light source, or so forth) using an optical filter or a waveguide grating router. It inputs the spectrum-sliced light signal into the reflective semiconductor optical amplifier, and then a signal outputted after being amplified and reflected in the reflective semiconductor optical amplifier is used for transmission. As the reflective semiconductor optical amplifier transmits an inputted spectrum-sliced signal through amplifying/modulating/re-outputting processes, it has the property of maintaining transmission characteristics of the spectrum-sliced signal. That is, in order to transmit high-speed data in the reflective semiconductor optical amplifier, the line width of an inputted spectrum-sliced signal needs to be wider. The reflective semiconductor optical amplifier has characteristics in that a long-distance transmission is limited by the chromatic dispersion effect generated in an optical fiber. Also, in the reflective semiconductor optical amplifier, in the case of considering a limited line width of a broadband light source - such as a fiber amplifier, a light emitting diode, or so forth - which is used as a light source for providing a spectrum-sliced signal, the number of acceptable subscribers is decreased according to the increase in the line width of an inputted spectrum-sliced signal.

Accordingly, the present invention has been made to solve the above-mentioned problems occurring in the prior art and provides additional advantages.

It is the object of the present invention to provide a wavelength-division-multiplexed passive optical network using a economical wavelength-division-multiplexed light source that may be realized in a simple, reliable, and inexpensive implementation.

This object is solved by the subject matter of the independent claims.

Preferred embodiments are defined in the dependent claims.

In one embodiment, a wavelength-division-multiplexed passive optical network includes: a central office in which a multi-wavelength lasing source is located; a plurality of subscriber terminals for transmitting an upward signal by the refection signal of a multi-wavelength signal transmitted from the central office; and a local office connected to the central office and the subscriber terminals through transmission optical fibers, for demultiplexing the multi-wavelength signal transmitted from the central office, transmitting the demultiplexed signal to the subscriber terminals, and multiplexing signals inputted from each of the subscriber terminals and transmitting the multiplexed signals to the central office.

According to a further embodiment of the present invention, there is provided an operation method for operating the wavelength-division-multiplexed passive optical network.

The above features and advantages of the present invention will be more apparent from the following detailed description taken in conjunction with the accompanying drawings, in which:
FIG 1 is a construction view of a multi-wavelength lasing source;
FIG 2 is a waveform view illustrating a spectrum shape of a spectrum-sliced channel;
FIG 3 is a construction view of a wavelength-division-multiplexed passive optical network according to a first embodiment of the present invention;
FIG 4 is a construction view of a wavelength-division-multiplexed passive optical network according to a second embodiment of the present invention; and
FIG 5 is a construction view of a semiconductor optical amplifier applied to passive optical networks according to the first and the second embodiments of the present invention.

Hereinafter, a wavelength-division-multiplexed passive optical network according to preferred embodiments of the present invention will be described with reference to the accompanying drawings. For the purposes of clarity and simplicity, a detailed description of known functions and configurations incorporated herein will be omitted as it may make the subject matter of the present invention unclear.

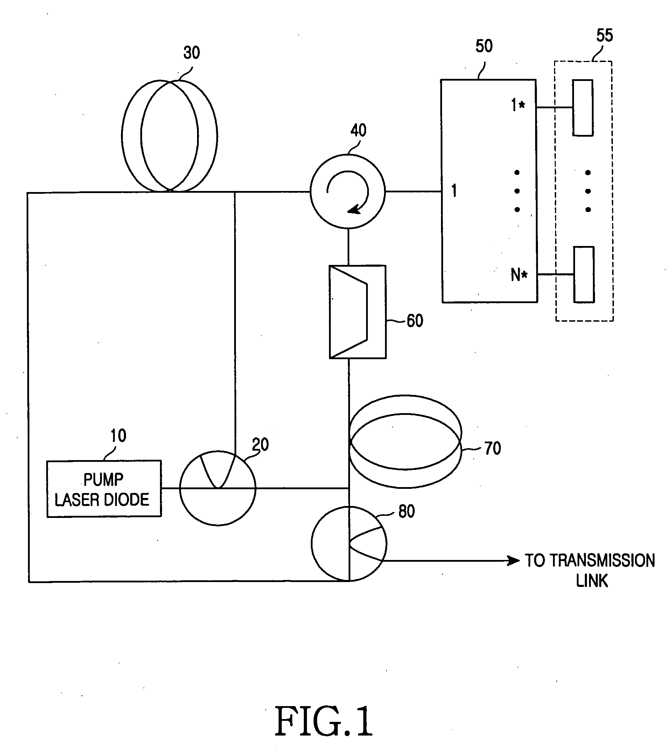

FIG 1 is a simplified block diagram of a multi-wavelength lasing source.

As shown, the multi-wavelength lasing source includes a pump laser diode 10, a first and a second optical amplifier 30 and 70, a circulator 40, a multiplexing/demultiplexing device 50, a plurality of mirrors 55, a band-pass filter (BPF) 60, and a first and a second optical distributor 20 and 80. Herein, the first and the second optical amplifiers 30 and 70 may be erbium-doped fiber amplifiers (EDFAs) or optical amplifiers, and the multiplexing/demultiplexing device 50 may be an 1×N waveguide grating router.

Now, the operation principle of a multi-wavelength lasing source having the construction as described above will be explained as follows.

First, the first optical amplifier 30 is backward-pumped by a pump laser diode 10 and generates amplified spontaneous emission noise (ASE noise). Then, the ASE noise passes the circulator 40 and inputted into the multiplexing/demultiplexing device 50, so as to be spectrum-sliced. N channels spectrum-sliced through the multiplexing/demultiplexing device 50 are reflected respectively by the N number of mirrors 55, inputted back to the multiplexing/demultiplexing device 50, multiplexed in the multiplexing/demultiplexing device 50, and then outputted from the multiplexing/demultiplexing device 50.

Thereafter, the circulator 40 inputs the multiplexed signal from the multiplexing/demultiplexing device 50 into the band-pass filter 60, so that the spectrum band of the multiplexed signal can be limited. It is preferred that the band-pass filter 60 has the same passband as the free spectral range of a waveguide grating router that makes up the multiplexing/demultiplexing device 50. Therefore, the band-pass filter 60 removes signals existing outside of the bandwidth of the wavelength-division-multiplexed signal. As a result, since signals existing outside of the bandwidth of the wavelength-division-multiplexed have been removed and then amplified in the next stage, the output power of the multiplexed signals can be amplified efficiently.

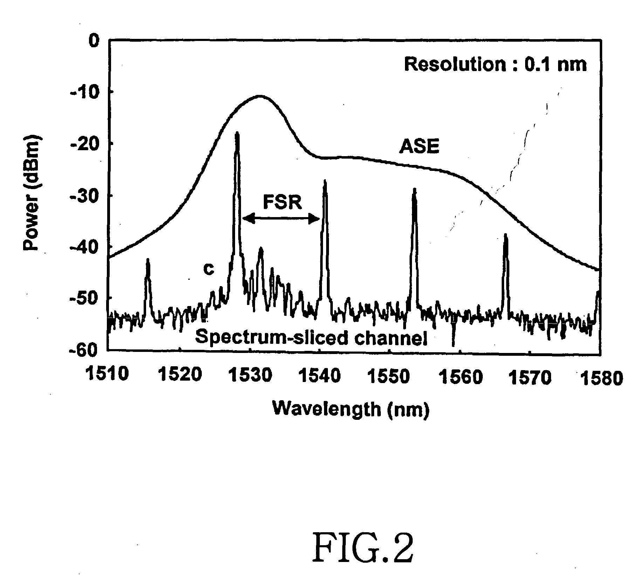

Meanwhile, if the bandwidth of the ASE noise signals outputted from the first optical amplifier 30 is wider than the free spectral range (FSR) of the waveguide grating router of the multiplexing/demultiplexing device 50, the spectrum of signals, which are inputted to the waveguide grating router and then are spectrum-sliced, have a variety of wavelengths spread in the free spectral range, as shown in FIG 2. When such signals inputted into a reflective semiconductor optical amplifier to be amplified, are directly modulated according to upward data and then transmitted into a central office, the spectra spread in a wide wavelength band causes a chromatic dispersion effect during the transmission through an optical fiber. As a result, the receiving sensitivity of receiver is degraded, and it becomes impossible to transmit high speed data to a long-distance location. However, it is preferred that the band-pass filter 60 limits the spectrum band of the spectrum-sliced signals so as to have a bandwidth not exceeding the free spectral range of the waveguide grating router, so that respective spectra of spectrum-sliced signals exists in only one wavelength to allow a high-speed data transmission to a long-distance location.

Multiplexed signals, the spectrum band of which is limited by the band-pass filter 60 as described above, are amplified in the second optical amplifier 70, and then inputted into the second optical distributor 80. The second optical distributor 80 inputs a first part of the multiplexed signals into the first optical amplifier 30 and inputs a second part of the multiplexed signals, and the rest of the multiplexed signals are fed into an optical fiber for transmission.

The first part of the multiplexed signals, which are inputted into the first optical amplifier 30, repeats the process described above, while passing the circulator 40, the multiplexing/demultiplexing device 50, the mirrors 55, the band-pass filter 60, and the second optical amplifier 70.

Therefore, the light source exampled in FIG 1 repeats the processes infinitely, generates multiplexed signals of high output power having a very narrow line width, and inputs the generated signals into the transmission optical fiber.

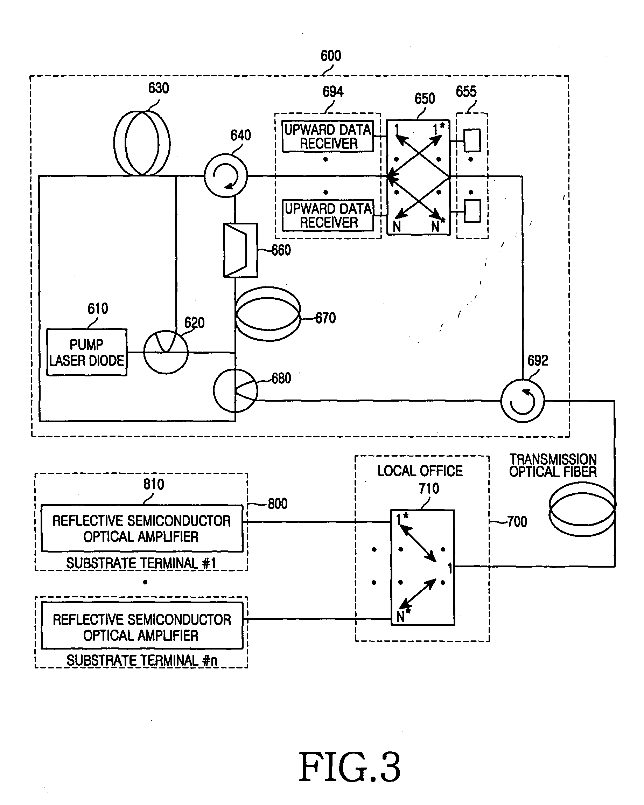

FIG 3 is a construction view of a wavelength-division-multiplexed passive optical network according to a first embodiment of the present invention. As shown, a wavelength-division-multiplexed passive optical network according to a first embodiment of the present invention includes a central office 600, a local office 700, and subscriber terminals 800, wherein each apparatus is connected with one another through an optical fiber.

The central office 600 transmits multi-wavelength signals generated from a multi-wavelength lasing source. To this end, the central office 600 includes a pump laser diode 610, a first and a second optical distributor 620 and 680, a first and a second optical amplifier 630 and 670, a first and a second circulator 640 and 692, a multiplexing/demultiplexing device 650, a plurality of mirrors 655, a band-pass filter 660, and a plurality of upward optical receivers (Rx) 694.

With the exception of the upward optical receiver 694 and the second circulator 692 among the devices shown in FIG 3, the other devices are operated as a multi-wavelength lasing source. That is, the pump laser diode 610, the first optical distributor 620, the first optical amplifier 630, the first circulator 640, the multiplexing/demultiplexing device 650, the plurality of mirrors 655, the band-pass filter 660, the second optical amplifier 670, and the second optical distributor 680 are respectively corresponded with the pump laser diode 10, the first optical distributor 20, the first optical amplifier 30, the circulator 40, the multiplexing/demultiplexing device 50, the mirrors 55, the band-pass filter 60, the second optical amplifier 70, and the second optical distributor 80. Therefore, a detailed description of the construction and the operation of the multi-wavelength lasing source included in the central office 600 will be omitted to avoid redundancy.

However, the construction and the operation of the multiplexing/demultiplexing device 650 are different from those of the multiplexing/demultiplexing device 50 included in the multi-wavelength lasing source illustrated in FIG 1. That is, the multiplexing/demultiplexing device 650 not only performs the operation of generating multi-wavelength lasing light and transmitting the light to the band-pass filter 660 through the first circulator 640, but also performs the operation of demultiplexing multiplexed upward signals transmitted through the second circulator 692 and transmitting the demultiplexed signals to the respective upward optical receivers 694. As a result of this, the central office of the present invention performs both the generation of multi-wavelength signals and the demultiplexing of upward signals using one multiplexing/demultiplexing device 650. Thus, the construction is simplified, and the central office 600 can be realized with a low cost. To this end, the multiplexing/demultiplexing device 650 may be an N×N waveguide grating router.

The multiplexing/demultiplexing device 650 comprises a first input/output terminal and a plurality of upward signal output terminals at one side so as to receive amplified spontaneous emission noise generated from the first optical amplifier 630 and to output a multi-wavelength lasing light, and further comprises a plurality of second input/output terminals and an upward signal input terminal for a multi-wavelength lasing light generation at the other side.

When the multiplexing/demultiplexing device 650 receives an amplified spontaneous emission noise signal transmitted from the first optical amplifier 630 through the first input/output terminal of the multiplexing/demultiplexing device 650,, the multiplexing/demultiplexing device 650 demultiplexes the noise signal and outputs the demultiplexed signal through the second input/output terminal.

Next, the multiplexing/demultiplexing device 650 again receives signals reflected by the mirrors 655 respectively connected with the second input/output terminals, and then multiplexes the received signals and outputs the multiplexed signals through the first input/output terminal.

Meanwhile, when the multiplexing/demultiplexing device 650 receives multiplexed upward signals, the multiplexing/demultiplexing device 650 demultiplexes the upward signals and outputs the demultiplexed signals through the upward signal output terminals. Then, each of the upward optical receivers 694, which are respectively connected with the upward signal output terminals comprised at one side of the multiplexing/demultiplexing device 650, receive corresponding upward signals and converts the received signals into electric signals.

The second circulator 692 outputs a multi-wavelength lasing light outputted from the multiplexing/demultiplexing device 650 to a local office 700 through a transmission optical fiber, and also transmits multiplexed upward signals inputted from the local office 700 to the upward signal input terminal of the multiplexing/demultiplexing device 650.

The local office 700 comprises a 1×N waveguide grating router 710. The local office demultiplexes multi-wavelength signals transmitted from the central office 600 and then transmits the demultiplexed signals to the subscriber terminals 800. Also, the local office 700 multiplexes upward signals inputted from each of the subscriber terminals 800 and transmits the multiplexed signals to the central office 600.

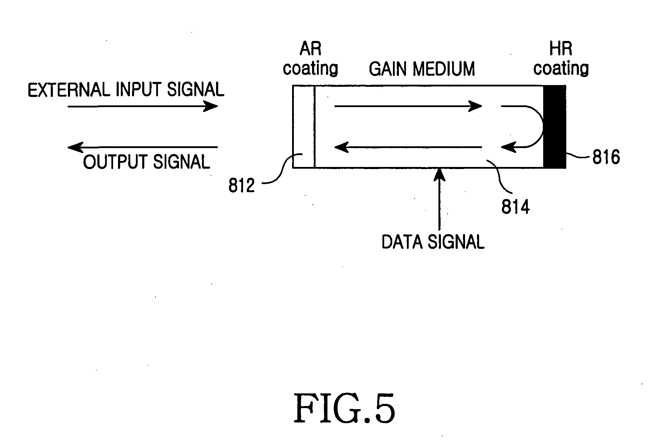

The subscriber terminals 800 transmits upward signals using the reflected signals of multi-wavelength signals from the central office 600 and are demultiplexed by the local office 700. That is, the subscriber terminals 800 doesn't include an upward optical source. To this end, each of the subscriber terminals 800 includes a reflective optical amplification means, preferably a reflective semiconductor optical amplification means 810. A detailed description of the construction and the operation of the reflective semiconductor optical amplifier 810 will be described in more detail with reference to FIG 5.

The operation of a wavelength-division-multiplexed passive optical network described above according to the first embodiment of the present invention will be described as follows.

First, multiplexed signals outputted from the multi-wavelength lasing source of the central office 600 are inputted to a transmission optical fiber through the second circulator 692. The multiplexed signals inputted to the transmission optical fiber are inputted into the 1×N waveguide grating router 710 of the local office 700, demultiplexed, and transmitted into the subscriber terminals 800. The signals transmitted into the subscriber terminals 800 are inputted into the reflective semiconductor optical amplifier 810 and reflected by the reflective semiconductor optical amplifier 810. The signals are modulated according to the upward data while being amplified and then finally forwarded for upward signal transmission.

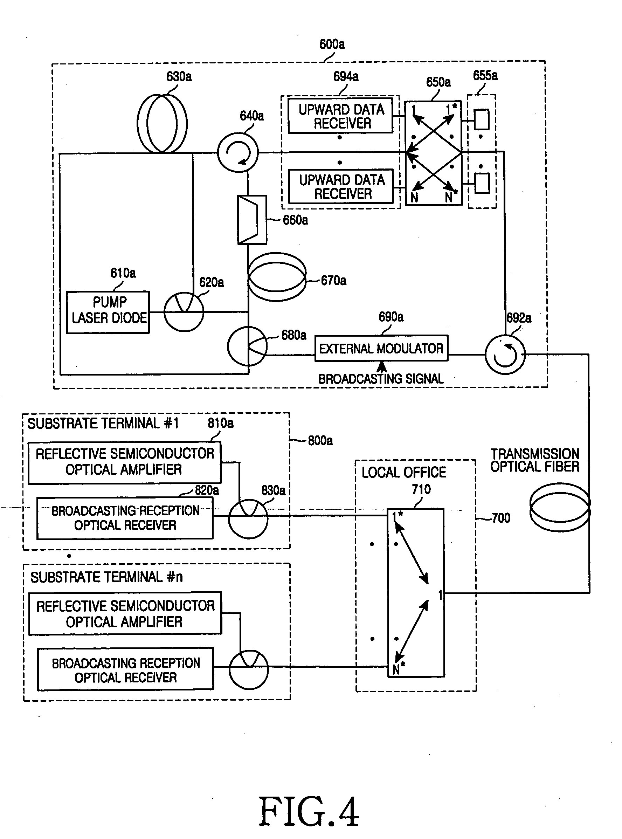

FIG 4 is a construction view of a wavelength-division-multiplexed passive optical network according to a second embodiment of the present invention. As shown, the wavelength-division-multiplexed passive optical network includes a central office 600a and subscriber terminals 800a. Compared to the wavelength-division-multiplexed passive optical network exampled in FIG 3, the central office 600a further includes an external modulator (EM) 690a, and each of the subscriber terminals 800a further includes a broadcasting reception optical receiver 820a and an optical distributor 830a.

In the embodiment shown in FIG 4, the pump laser diode 610a, the first and the second optical distributors 620a and 680a, the first and the second optical amplifiers 630a and 670a, the first and the second circulators 640a and 692a, the multiplexing/demultiplexing device 650a, the mirrors 655a, the band-pass filter 660a, and upward signal receivers 694a, respectively perform the same operation as those of the pump laser diode 610, the first and the second optical distributors 620 and 680, the first and the second optical amplifiers 630 and 670, the first and the second circulators 640 and 692, the multiplexing/demultiplexing device 650, the mirrors 655, the band-pass filter 660, and upward signal receivers 694, which are shown in FIG 3. Therefore, a detailed operation description of respective devices will be omitted to avoid redundancy.

The external modulator 690a modulates multi-wavelength lasing light outputted from the multiplexing/demultiplexing device 650a according to predetermined broadcasting service signals, and then outputs the modulated signal to the second circulator 692a. Therefore, the central office 600a of the present invention doesn't include an optical source for generating broadcasting service signals. It is preferred that the external modulator 690a is realized by one of a LiNbO₃ modulator, an electro-absorption modulator, and a semiconductor optical amplifier.

Meanwhile, compared to the subscriber terminals 800 exampled in FIG 3, each of the subscriber terminals 800a further includes a broadcasting reception optical receiver 820a and an optical distributor 830a in order to receive broadcasting signals generated from the external modulator 690a. The optical distributor 830a is added to distribute signals, which are transmitted from the local office 700, to the reflective semiconductor optical amplifier 810a and the broadcasting reception optical receiver 820a.

Typically, a signal of a multi-wavelength lasing source is a high-power signal having a very narrow line width. Therefore, when a signal of a multi-wavelength lasing source is inputted into the external modulator 690a and modulated according to broadcasting service signals for transmission, a chromatic dispersion effect in the optical fiber as well as signal-to-signal beat noise in the optical receiver are restrained. As a result, it is possible to transmit more broadcasting service signals over longer distances.

FIG 5 is a construction view of a semiconductor optical amplifier applied to passive optical networks according to the first and the second embodiments of the present invention.

As shown in FIG 5, a semiconductor optical amplifier comprises an anti-reflection coating face 812 formed on one side, a high-reflection coating face 816 formed on the other side, and a gain medium 814 between the anti-reflection coating face 812 and the high-reflection coating face 816. The semiconductor optical amplifier total-reflects a signal inputted through the anti-reflection coating face 812 using the high-reflection coating face 816, and then outputs the total-reflected signal while amplifying and modulating the signal when the signal passes through the gain medium 814.

In essence, an external input signal shown in FIG. 5 is a multi-wavelength signal outputted from the central office 600 and demultiplexed in the local office 700, and a signal, which utilizes a reflection signal of the demultiplexed multi-wavelength signal as an optical source and which has been modulated by upward data, is outputted as an output signal.

Therefore, a signal inputted into the reflective semiconductor optical amplifier is amplified, directly modulated according to upward data, and re-outputted. Signals re-outputted from the reflective semiconductor optical amplifier, that is, signals outputted from the subscriber terminals, are transmitted to a local office, multiplexed by a waveguide grating router comprised in the local office, and then transmitted to the central office. In FIG 4, the multiplexed upward signals transmitted into the central office pass a circulator and inputted into a waveguide grating router constituting a multi-wavelength lasing source, and then finally demultiplexed. Thereafter, the demultiplexed upward signals are inputted into the upward optical receivers, thereby being detected as electric signals.

As described above, according to the wavelength-division-multiplexed passive optical network of the present invention, a multiplexing/demultiplexing device for generating a multi-wavelength lasing source and a multiplexing/demultiplexing device for receiving upward signals in a central office can be realized in one body, thus reducing the cost of the central office as it requires no additional operating components. Also, a subscriber terminal is equipped with a reflective optical amplification means so that upward signals can be transmitted using the reflection signals of multi-wavelength signals transmitted from the central office. This further reduces the cost of the subscriber terminal. Accordingly, the present invention has an advantage in that a wavelength-division-multiplexed passive optical network can be economically realized by using a low-cost wavelength-division-multiplexed light source, thereby enabling the wavelength-division-multiplexed passive optical network to be implemented.

While the invention has been shown and described with reference to certain preferred embodiments thereof, it will be understood by those skilled in the art that various changes in form and details may be made therein without departing from the scope of the invention as defined by the appended claims.

## Claims

1. A wavelength-division-multiplexed passive optical network comprising:
a central office in which a multi-wavelength lasing source is located;
a plurality of subscriber terminals for transmitting an upward signal using a reflected signal of a multi-wavelength signal transmitted from the central office; and
a local office disposed between the central office and the subscriber terminals via optical fibers for demultiplexing the multi-wavelength signal transmitted from the central office and for multiplexing signals from each of the subscriber terminals.

2. The wavelength-division-multiplexed passive optical network as claimed in claim 1, wherein the central office comprises:
a first optical amplifier for generating amplified spontaneous emission noise;
a multiplexing/demultiplexing device having a first input/output terminal and a plurality of upward signal output terminals at a first side portion so as to receive the amplified spontaneous emission noise and to output a multi-wavelength lasing light, and a plurality of second input/output terminals and an upward signal input terminal for a multi-wavelength lasing light generation at the first side portion so as to output a multi-wavelength lasing light multiplexed in response to the input of the amplified spontaneous emission noise and to demultiplex and to output the upward signal in response to the input of the upward signal;
a plurality of upward signal receivers coupled to the upward signal output terminals at the first side portion of the multiplexing/demultiplexing device in one-to-one correspondence;
a plurality of reflection means coupled in one-to-one correspondence to the second input/output terminals at the first side portion of the multiplexing/demultiplexing device, so as to input demultiplexed signals outputted through the second input/output terminals back to the second input/output terminals; and
a circulator for outputting a multi-wavelength lasing light inputted from the multiplexing/demultiplexing device to the local office and transmitting an upward signal inputted from the local office to the upward signal input terminal of the multiplexing/demultiplexing device.

3. The wavelength-division-multiplexed passive optical network as claimed in claim 2, wherein the multiplexing/demultiplexing device is an N×N waveguide grating router.

4. The wavelength-division-multiplexed passive optical network as claimed in claim 2 or 3, wherein the plurality of reflection means are mirrors.

5. The wavelength-division-multiplexed passive optical network as claimed in one of claims 2 to 4, wherein the central office further comprises an external modulator for modulating a multi-wavelength lasing light outputted from the multiplexing/demultiplexing device on the basis of predetermined broadcasting service signals and for outputting the modulated signal to the circulator.

6. The wavelength-division-multiplexed passive optical network as claimed in claim 5, wherein the external modulator is a LiNbO₃ modulator.

7. The wavelength-division-multiplexed passive optical network as claimed in claim 5, wherein the external modulator is an electro-absorption modulator.

8. The wavelength-division-multiplexed passive optical network as claimed in claim 5, wherein the external modulator is a semiconductor optical amplifier.

9. The wavelength-division-multiplexed passive optical network as claimed in one of claims 1 to 8, wherein the subscriber terminal includes a reflective optical amplification means.

10. The wavelength-division-multiplexed passive optical network as claimed in claim 9, wherein the reflective optical amplification means is a reflective semiconductor optical amplifier.

11. The wavelength-division-multiplexed passive optical network as claimed in claim 10, wherein the reflective semiconductor optical amplifier comprises an anti-reflection coating face formed on one side, a high-reflection coating face formed on another side, and a gain medium formed between the anti-reflection coating face and the high-reflection coating face, so that the semiconductor optical amplifier total-reflects a signal inputted through the anti-reflection coating face by the high-reflection coating face and outputs the total-reflected signal.

12. The wavelength-division-multiplexed passive optical network as claimed in claim 11, wherein the semiconductor optical amplifier further amplifies and moduates the signal when the signal passes the gain medium.

13. The wavelength-division-multiplexed passive optical network as claimed in one of claims 9 to 12, wherein the subscriber terminal further comprises an optical distributor and a broadcasting data optical receiver so as to receive a broadcasting service signal, the optical distributor distributing downward signals inputted from the local office to the reflective optical amplification means and the broadcasting data optical receiver.

14. An operation method adapted to operate the wavelength-division-multiplexed passive optical network according to one of claims 1 to 13.
